Europäisches Patentamt

European Patent Office

Office européen des brevets

(11) Publication number: **0 174 384**
**B1**

(12) EUROPEAN PATENT SPECIFICATION

(45) Date of publication of patent specification: **09.09.87**

(51) Int. Cl.⁴: **F 16 K 1/44**

(21) Application number: **84110849.1**

(22) Date of filing: **12.09.84**

(54) Double seat valve.

(43) Date of publication of application:
**19.03.86 Bulletin 86/12**

(45) Publication of the grant of the patent:
**09.09.87 Bulletin 87/37**

(84) Designated Contracting States:
**AT BE CH DE FR GB IT LI LU NL SE**

(56) References cited:
**EP-A-0 039 319**
**EP-A-0 044 517**
**DE-A-2 456 675**
**DE-A-3 005 329**
**GB-A-2 011 583**
**GB-A-2 064 724**

(73) Proprietor: **Lavrids Knudsen Maskinfabrik A/S**
**Postboks 74**
**DK-6000 Kolding (DK)**

(72) Inventor: **Rasmussen, Erik**
**Vesterled 19**
**DK-6000 Kolding (DK)**
Inventor: **Lundquist, Gunnar**
**Lokesgata 4**
**S-24200 Hoerby (SE)**
Inventor: **Lading, Stig**
**Kobbelskoven 14**
**DK-6000 Kolding (DK)**

(74) Representative: **Stach, Harald, Dr. Dipl.-Chem.**
**Adenauerallee 30**
**D-2000 Hamburg 1 (DE)**

Courier Press, Leamington Spa, England.

## Description

The invention relates to a double seat valve of the type defined in the preamble of claim 1.

Double-seat valves of this type are known from EP—A—39319. Although these valves have proven in practice to be in general highly satisfactory, in certain processes in the brewery and dairy industry there are still desired improved possibilities for a simple and reliable cleaning of the valve also with respect to the valve seats and the sealing means.

From DE—A—24 56 675 there is known a similar double-seat valve in which the second closure member can be moved by separate drive means independently from the first closure member into a position in which between both closure members and/or the respective valve seats there is formed a slit not exceeding in cross section that of a drain tube connecting the leakage space to the atmosphere. This known construction, however, does not permit an adequate cleaning of the valve seat and the corresponding sealing sealing surface of the first closure member.

From DE—A—27 51 734 and DE—A—30 05 329 there are further known other similar double-seat valves having two valve discs each movable between a closed position axially sealing against a conical valve seat, and an open position axially lifted off the respective valve seat. With these constructions the smaller valve disc can be moved by the drive means into abutment with the larger second valve disc and thereafter both valve discs are moved together into the open position. In addition there are provided separate drive means for individually slightly lifting off each individual valve disc in order to enable a flow of cleaning liquid from the adjacent conduit past the valve seat to the leakage space. These known valves, however, are sensitive to pressure differences and pressure hammers in the conduits causing undesired opening movements of the valve discs. In addition, they do not permit any cleaning of the valve seats as long as the adjacent conduits are filled with product.

Finally, DE—A—31 08 778 discloses a method for the simultaneous cleaning of both valve seats of a double seat valve being in contact with product on at least one side. To this purpose it is proposed to move a slide-type closure member in contact with product by a predetermined distance towards the product-containing part of the valve housing and simultaneously retract or lift off the other closure member in order to simultaneously expose both valve seats to cleaning liquid.

Accordingly, it is now an object of the invention to provide a double-seat valve of the type defined in the preamble of claim 1, which with minimum product losses during valve operation enables an easy cleaning of both the valve seats and the sealing means of each closure member and can be made to reliably prevent leakage caused by pressure hammers.

In order to solve this object, the double-seat valve defined in the preamble of claim 1 is provided with the features of the characterizing part of claim 1.

Advantageous further modifications of the double-seat valve are defined in the subclaims.

Preferred embodiments of the invention are now described with reference to the enclosed drawings. There are shown in

figure 1 a schematic longitudinal section of a double-seat valve in the closed position (left part of the drawing) and the open position (right part of the drawing),

figure 2 a schematic longitudinal section through the double-seat valve shown in figure 1 in the intermediate position of the first closure member (right part of the drawing) and the intermediate position of the second closure member (left part of the drawing),

figure 3a a schematic partial section through a modified double-seat valve in the closed position,

figure 3b a schematic partial section through the double-seat valve shown in figure 3a in the intermediate position of the first closure member,

figure 3c a schematic partial section through the double-seat valve shown in figures 3a and 3b in the intermediate position of the second closure member,

figure 3d a schematic partial section through the double-seat valve shown in figures 3a to 3c in the open position,

figure 4a a schematic partial section through a modified double-seat valve in the closed position,

figure 4b a schematic partial section through the double-seat valve shown in figure 4a in the intermediate position of the first closure member,

figure 4c a schematic partial section through the double-seat valve shown in figures 4a and 4b in the intermediate position of the second closure member,

figure 4d a schematic partial section through the double-seat valve shown in figures 4a to 4c in the open position.

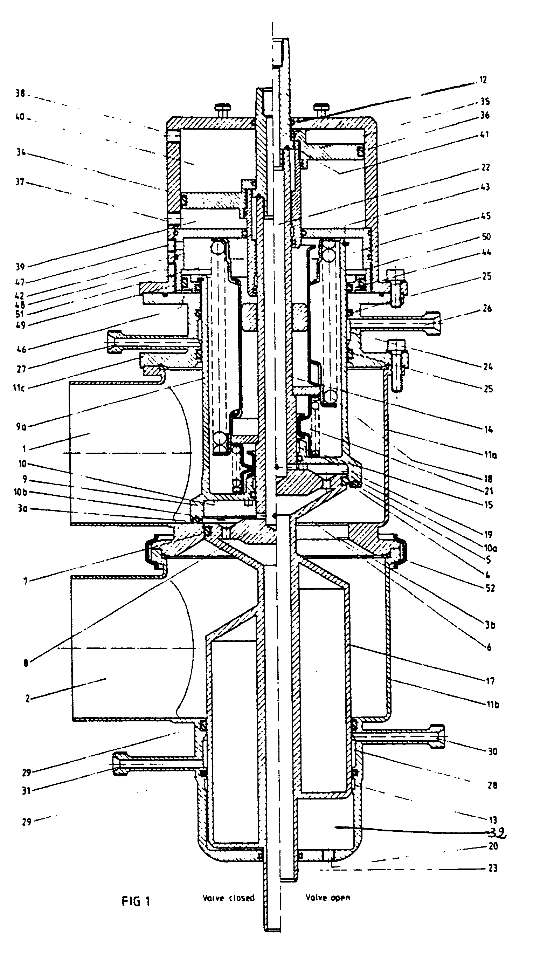

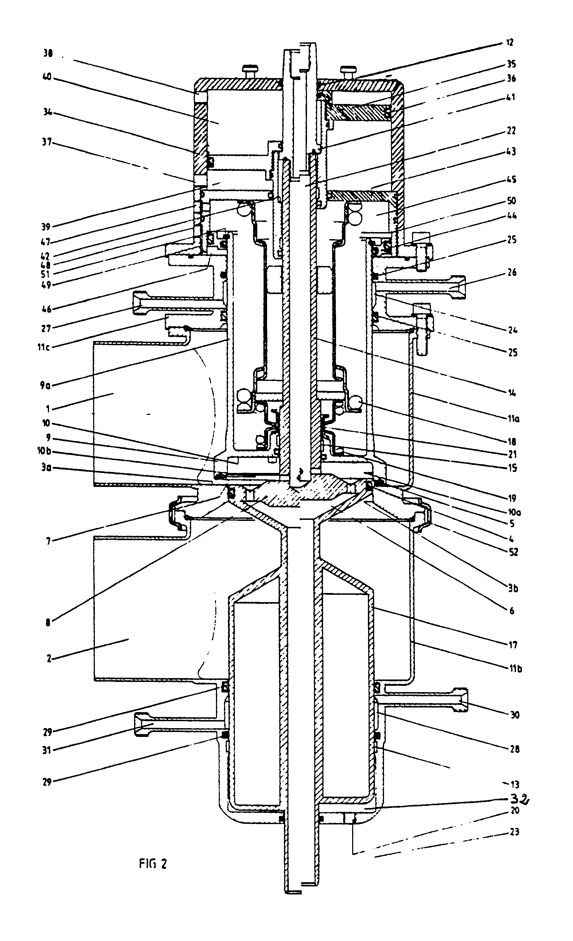

The double seat valve shown in Fig. 1 and 2 comprises a valve housing 11 consisting of an upper housing member 11a having a conduit opening 1, a lower housing member 11b having a conduit opening 2, and a cover member 11c. The conduit openings 1 and 2 are adapted to be connected in the usual way to conduits (not shown), at least one of which is intended to normally contain a liquid product, whereas the other may be used for feeding or withdrawing a cleaning liquid, respectively. The upper housing member 11a and the lower housing member 11b being releasibly connected by a clamping member 52, communicate through a valve opening forming an axial valve seat 3a and a cylindrical valve seat 3b. In the valve housing 11 there are coaxially guided a first closure member forming a slide piston 8 and a second closure member 9 between an open position and a closed position. The first and second valve members together realize in their closed positions a double seal between the space within and the upper housing member 11a and the space within the lower housing member 11b. To this purpose the slide piston 8 is provided with a radial sealing ring 4 adapted to be in the closed position in sealing contact with the cylindrical valve seat 3b. The second closure member 9 has an axial sealing ring 5 adapted to sealingly abut in the closed position with the axial valve seat 3a of the upper housing member 11a. The second closure member 9 has a clyindrical piston wall 9a sealingly guided for axial displacement in an opening of the cover member 11c.

The slide piston 8 is rigidly connected to a coaxial rod 14 and a drive piston 17 having substantially the same outer diameter than the cylindrical valve seat 3b and being guided for axial displacement in a slide ring 13 in the lower housing member 11b. The rod 14 is guided for axial displacement in a slide ring 12 disposed in a central opening of an auxiliary cylinder 34 rigidly mounted on an upper flange of the cover member 11c. Thus, the slide piston 8, the drive piston 17 and the rod 14 form a rigid unit slidably guided near both ends thereof.

Between the slide piston 8 and the second closure member 9 there is formed a leakage space 7 in both the closed and the open positions thereof. Said leakage space 7 is permanently connected to the outside by a drain channel 6 in a drain tube 23 extending coaxially through the drive cylinder 17 and an opening in the lower wall of the lower housing member 11b. Thus, any possible leakage past the radial sealing ring 4 or the axial sealing ring 5, respectively is drained from the leakage space 7 through the drain channel 6 so that any intermixing of the products in the conduits connected to conduit openings 1 and 2 will be prevented. The drain tube 23 can be provided with means (not shown) for closing or reducing the flow cross-section of the drain channel 6.

In the rod 14 there is provided an axial inlet channel 22 communicating via radial bores with the leakage space 7. By introducing a cleaning fluid through inlet channel 22 it is possible to clean the leakage space 7 and the drain channel 6 in both the open and the closed positions of the first and second closure members 8 and 9. The rod 14 is additionally guided in a slide ring 15 in the annular second closure member 9.

In the internal space surrounded by the cylindrical piston wall 9a of the second closure member 9 there are arranged a first compression spring 18 and a second compression spring 19. The first compression spring 18 is supported at its end remote from the valve seats against an auxiliary drive cylinder 43 rigidly mounted within the auxiliary cylinder 34 for purposes to described later. The first compression spring 18 permanently urges the second closure member 9 into its closed position. The weaker second compression spring 19 permanently acts against the second closure member 9 in order to hold together the lower and upper closure members 8 and 9.

The prime mover for opening the valve is a pneumatic motor comprising a gas chamber 32 formed between the drive piston 17 and the bottom wall of the lower housing member 11b. In order to move the valve into its open position, compressed gas is introduced into the gas chamber 32 via the inlet opening 20. Since the gas pressure will be greater than the strength of the first compression spring 18, the slide piston 8 and the rod 14 both rigidly connected to the drive piston 17 begin to move upwardly against the force of the first compression spring 18. The second closure member 9 is provided at its end facing the slide piston 8 with a recess 10 having a substantially cylindrical seat wall 10a coaxial to the cylindrical valve seat 3b and dimensioned to receive during opening movement the end portion of the slide piston 8 before the second closure member 9 opens. When the opening movement continues, the slide piston comes into contact with an abutment disposed in the recess 10 of the second closure member. Thereafter the gas pressure in the gas chamber 32 moves both closure members 8 and 9 together into their opening position shown in the right-hand half of figure 1.

When the gas pressure in the gas chamber 32 ceases, the first compression spring 18 forces the two united closure members 8 and 9 downwardly until the axial sealing ring 5 of the second closure member 9 sealingly rests against the axial valve seat 3a so that the second closure member 9 comes to a rest in its closed position, whereas the slide piston 8 continues to be moved downward by the first compression spring 18 until there is reached the fully closed position shown in the left-hand half of figure 1.

In order to enable an adequate cleaning of those parts of the cylindrical piston wall 9a and the circumferential surface of the drive piston 17 which during opening movement are displaced into sliding contact with the respective housing member, there are provided in the upper housing member 11a a washing space 24 between sealing rings 25, said washing space 24 having an inlet channel 26 and an outlet channel 27 for a cleaning fluid.

Likewise, the lower housing member 11b is provided with a washing space 28 disposed between sealing rings 29 and having an inlet channel 30 and an outlet channel 31 for cleaning fluid.

In order to enable an adequate cleaning not only of the leakage space 7, but also of the sealing surfaces of the sealing rings 4 and 5 and the respective valve seats 3a and 3b, there is provided an annular groove 10b disposed at the entrance end of the cylindrical seat wall 10a of the recess 10. The adjacent edge of the cylindrical valve seat 3b is slightly beveled and forms in the closed position of the second closure member 9 a side-wall for said annular groove 10b which is dimensioned to permit in an intermediate position of the radial sealing ring 4 opposite said annular groove 10b a flow of cleaning liquid along the cylindrical valve seat 3b and between the opposed circumferential surfaces of the sealing ring 4 and the annular groove 10b.

In order to move the slide piston 8 to its intermediate position there are provided auxiliary drive means independent from the pneumatic motor adapted to move the drive piston 17. In the auxiliary cylinder 34 there is disposed an auxiliary piston 35 having a radial sealing ring 36 being in permanent sealing contact with the internal circumferential surface of the auxiliary cylinder 34. The auxiliary piston 35 separates an upper gas chamber 40 having an inlet opening 38 from a lower gas chamber 39 having an inlet opening 37. The annular auxiliary piston 35 is sealingly guided for limited axial movement on the rod 14 which has an external projection 41 cooperating with an internal shoulder 42 of the auxiliary piston 35 for limiting the axial movement thereof. In order to move the slide piston 8 with its radial sealing ring 4 into the intermediate position there is introduced a pressurized gas via inlet opening 37 into the lower gas chamber 39 to cause the auxiliary piston 35 to move upwardly from the position shown in the left-hand half of figure 2 to the position shown in the right-hand half of the same figure. Since the internal shoulder 42 of the auxiliary piston 35 abuts the external projection 41 of the rod 14 at a position few millimetres before the auxiliary piston 35 abuts the upper wall of the auxiliary cylinder 34, there is obtained a lifting movement of the slide piston 8 by some millimetres into the intermediate position of the radial sealing ring 4. When the gas pressure in the lower gas chamber 39 ceases, the first compression spring 18 moves the slide piston back into its closed position.

In order to also clean the axial valve seat 3a and the corresponding axial sealing ring 5 there is further provided a second annular auxiliary piston 44 guided for limited axial movement in the auxiliary drive cylinder 43. The annular auxiliary piston 44 separates a lower gas chamber 46 connected via an annular channel 49 with an inlet opening 48 from an upper gas chamber 45 having an inlet opening 47. The internal circumferential wall of the auxiliary drive cylinder 43 is provided with an abutment 50 for limiting the upward movement of the second auxiliary piston 44 which in addition cooperates at its inner margin with a projection 51 at the upper end of the cylindrical piston wall 9a of the second closure member 9. In the embodiment shown this projection is a circlip 51 engaged in an annular groove of the cylindrical piston wall 9a.

When pressurized gas is introduced via the inlet opening 48 and the annular channel 49 into the lower gas chamber 46 this causes an upward displacement of the second auxiliary piston 44 by a small distance of about 3 mm until the second auxiliary piston 44 comes into contact with the abutment 50 of the auxiliary drive cylinder 43. This movement due to the engagement of the second auxiliary piston 44 with the circlip 51 fixed to the cylindrical piston wall 9a causes a lifting movement of the second closure member 9 by a small distance of about 3 mm into an intermediate position, in which it is possible to clean the valve seat 3a and the sealing ring 5 by flowing a stream of cleaning liquid from the internal space of the upper housing member 11a between the axial valve seat 3a and the opposed surface of the axial sealing ring 5 into the leakage space 7.

If during the movement of the slide piston 8 into its intermediate position it is desired to double-secure the second closure member in its closed position, there can be introduced pressurized gas through inlet opening 47 into the gas chamber 45 which includes the whole internal space of the second closure member 9 so that the latter is urged into its closed position by the first compression spring 18 and the additional gas pressure in the gas chamber 45. During the movement of the second closure member 9 into its intermediate position shown in the left-hand half of figure 2, there can be introduced pressurized gas through inlet opening 38 into the upper gas chamber 40 so that the auxiliary piston 35 permanently urges against the external projection 41 of the rod 14.

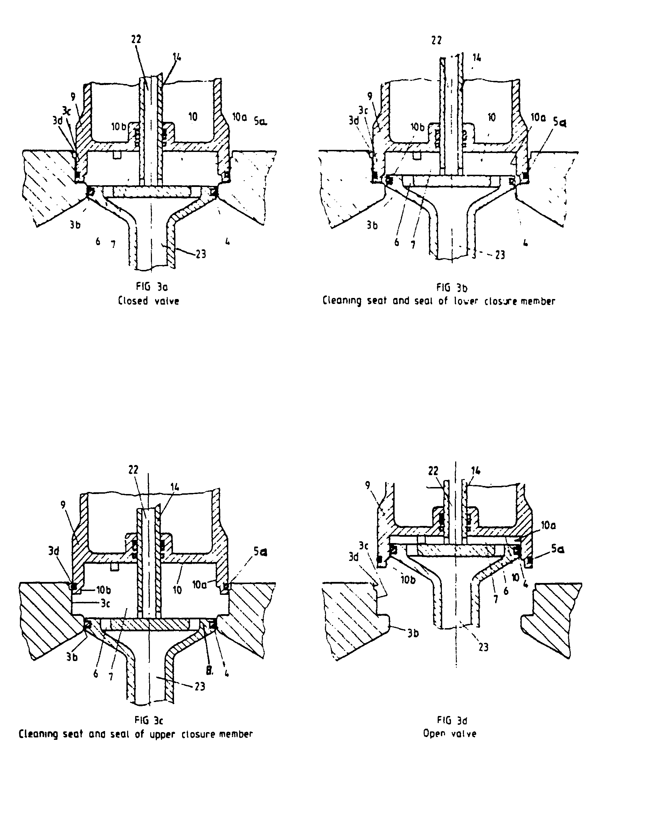

The double seat valve shown in figures 3a to 3d is closely similar in construction and operation to the valve shown in figures 1 and 2, except that the second closure member 9 also has a radial sealing ring 5a which in the closed position is in sealing contact with a second cylindrical valve seat 3c having a diameter slightly larger than the first cylindrical valve seat 3b. In addition to the annular groove 10b provided at the entrance end of the cylindrical seat wall 10a of the recess 10, there is provided a second annular groove 3d in the second cylindrical valve seat 3c at a predetermined distance above the area which in the closed position is in contact with the radial sealing ring 5a. Figure 3a shows the modified double-seat valve in its closed position, whereas the intermediate position of the slide piston 8 is shown in figure 3b, the intermediate position of the second closure member 9 is shown in figure 3c and the open position of the valve is shown in figure 3d. The movement of the closure members between their closed position and their open position, the movement of the slide piston between its closed position and the intermediate position, and the movement of the second closure member between its closed position and its intermediate position are effected in the same way explained in connection with figures 1 and 2 by moving the drive piston 17 or the auxiliary piston 35 or the second auxiliary piston 44 by means of pressurized gas.

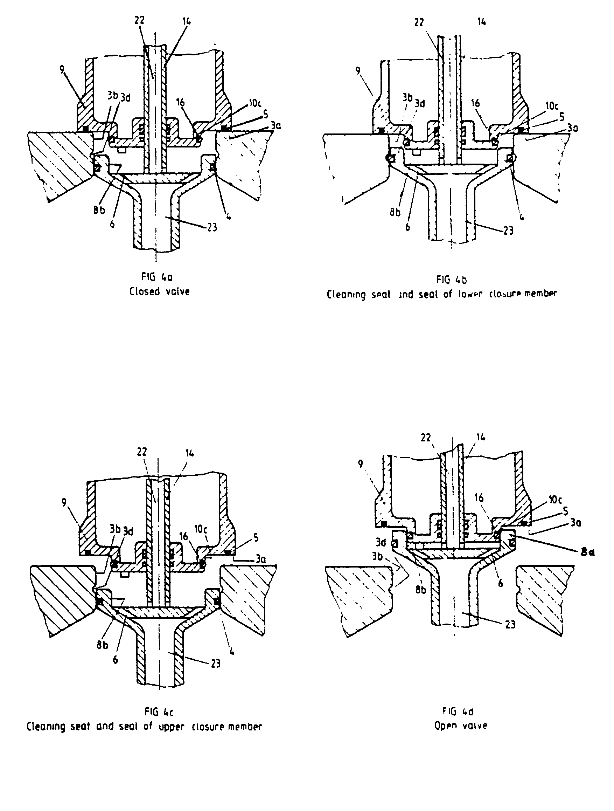

The double-seat valve shown in figures 4a to 4d is also closely similar in construction and operation to the valve shown in and described in connection with figures 1 and 2, except that said slide piston 8 comprises at its end facing the second closure member 9 an axially protruding outer annular rim 8a having a substantially cylindrical inner wall 8b, whereas the second closure member 9 is provided with an annular recess 10 having a cylindrical inner wall 10c dimensioned to receive during opening movement the annular rim 8a of the slide piston 8. In addition on one of said inner walls 8b or 10c there is provided a radial sealing ring 16 for sealing during opening movement against the opposed inner wall 10c or 8b, respectively, shortly before the second valve member 9 is lifted off its axial valve seat 3a. In this case, the annular groove 3d is disposed in the cylindrical valve seat 3b. If the lower housing member is connected in conventional manner to a conduit (not shown) for feeding a cleaning liquid, there will be obtained in the position of the radial sealing ring 4 opposite said annular groove 3d (figure 4b) a flow of cleaning liquid along the cylindrical valve seat 3b and between the radial sealing ring 4 and the opposed surfaces of the annular groove 3d into the leakage space 7. The movement of the closure members between the closed and open positions or the closed and intermediate positions, respectively are effected in the same was as described in connection with figures 1 and 2. Figure 4a shows the modified double-seat valve in its closed position, whereas figure 4b shows the valve in the intermediate position of the slide piston 8, 4c shows the intermediate position of the second closure member 9, and figure 4b the valve in the open position.

The double-seat valve according to the invention have been described above with reference to preferred embodiments.

## Claims

1. A double seat valve comprising: a valve housing (11) having at least two conduit openings (1,2) for fluid inlet and outlet, two coaxial valve seats (3a,3b) disposed between said openings, two valve closure members (8,9) each guided in said valve housing for coaxial movement relative to each other and to their respective valve seats (3a,3b) between an open position and a closed position, realising together in their closed position a double seal between said openings, a first closure member (8) being adapted to abut during its opening movement against the second closure member (9) and to move the latter during further opening movement also into its open position, a leakage space (7) defined between said closure members (8,9) in both the closed and the open position thereof, a drain outlet (6) permanently connecting said leakage space (7) to the outside of the valve, and drive means (17,20) for moving said first and second closure members (8,9) between said closed and said open positions, respectively, at least one closure member being a slide piston (8) having radial sealing means (4) and being operative to slide between an open position and a closed position sealingly received in a cylindrical valve seat (3b), and the other closure member (9) being provided at its end facing said slide piston (8) with a recess (10) having a substantially cylindrical seatwall (10a) coaxial to said cylindrical valve seat (3b) and dimensioned to sealingly receive during opening movement the end portion of said slide piston (8) before said second closure member (9) opens, characterized in that

a) in at least one of said cylindrical valve seat (3b) and the cylindrical seat wall (10a) of said recess (10) there is provided a circumferential annular groove (10b,3d) at a position passed by the radial sealing means (4) of said slide piston (8) during its movement between the closed position and the open position,

b) said annular groove (10b,3d) is dimensioned to permit in a predetermined intermediate position of said radial sealing means (4) opposite said annular groove (10b,3d) a seat-cleaning flow of liquid along said cylindrical valve seat (3b) and between the opposed circumferential surfaces of said radial sealing means (4) and said annular groove (10b,3d), and there are provided drive means (34—38) for moving said first closure member (8) between its closed position and said intermediate position.

2. A valve according to claim 1 wherein the recess (10) of the second closure member (9) has a cylindrical seat wall (10a) substantially flush with said cylindrical valve seat (3b) and a radial sealing ring (4) disposed at the end portion of the slide piston (8) is shifted during opening movement from said valve seat (3b) into sealing contact with said aligned cylindrical seat wall (10a), characterized in that the annular groove (10b) is disposed at the entrance end of said cylindrical seat wall (10a) so that in the closed position of the second closure member (9) the adjacent edge of said cylindrical valve seat (3b) forms a side wall for said annular groove (10b).

3. A valve according to claim 1 or 2, characterized in that

a) said second closure member (9) had radial sealing means (5a) and is operative for movement between an open position and a closed position sealingly received in a second cylindrical valve seat (3c) having a diameter larger than the cylindrical valve seat (3b) of the first closure member (8),

b) said second cylindrical valve seat (3c) is also provided with a circumferential annular groove (3d) at a position passed by the respective radial sealing means (5a) of said second closure member (9) during its movement between its closed position and its open position,

c) said annular groove (3d) is dimensioned to permit in an intermediate position of said second radial sealing means (5a) opposite said annular groove (3d) a seat-cleaning flow of liquid along said second cylindrical valve seat (3c) and between the opposed circumferential surfaces of the respective radial sealing means (5a) and said second annular groove (3d), and

d) there are provided separate drive means (40—45) for moving said second closure member (9) independently from said first closure member (8) between its closed position and the respective intermediate position.

4. A valve according to claim 1, characterized in that said slide piston (8) comprises at its end facing the second closure member (9) an axially protruding outer annular rim (8a) having a substantially cylindrical inner wall (8b), said second closure member (9) is provided with an annular recess (10) having a substantially cylindrical inner wall (10c) and being dimensioned to receive during opening movement said annular rim (8a) of the slide piston (8), and there is provided on one of said inner walls (8b or 10c) a radial sealing ring (16) adapted to seal during opening movement against the opposed inner wall (10c or 8b, respectively) shortly before said second valve member (9) opens, said annular groove (3d) being disposed in said cylindrical valve seat (3b) so that in the position of the radial sealing means (4) opposite said annular groove (3d) the radial sealing ring (16) still permits a seat-cleaning flow of liquid to and from the leakage space (7).

5. A valve according to any one of claims 1 to 4 wherein said second closure member (9) is shaped a substantially cylindrical piston having a cylindrical piston wall (9a) sealingly guided in the valve housing and having a diameter equal to or slightly smaller than that of the sealing means (5), said slide piston is provided with a rod (14) sealingly extending axially through said second closure member (9), and there are provided in the internal space of said second closure member (9) first spring means (18) permanently acting on said rod (14) for urging said slide piston (8) into its closed position, and second spring means (19) urging said second closure member (9) during the opening of the valve towards said slide piston (8), characterized in that the internal space surrounded by the cylindrical piston wall (9a) of the second closure member (9) together with the internal space of a cylinder (43) secured to the housing (11) forms a gas chamber (45) for receiving a pressurized gas through an inlet opening (47) in order to urge the second closure member (9) into its closed position.

6. A valve according to any one of claims 1 to 5, wherein the slide piston (8) is connected with a piston (17) forming the moveable part of a pneumatic motor adapted to move said slide piston (8) into abutment with said second closure member (9) and thereafter moving both closure members (8, 9) into their open position, said piston (17) being sealingly guided in the valve housing (11) and preferably having the same diameter as the cylindrical valve seat (3b) of the slide piston (8), characterized in that on the rod (14) of the slide piston (8) there is guided for limited axial movement an auxiliary piston (35) displaceable in auxiliary cylinder (34) separating same into two chambers (39, 40) for receiving a pressurized gas through respective inlet openings (37 or 38, respectively) in order to move said slide piston between its closed position and its intermediate position.

7. A valve according to claim 5 or 6, characterized in that in said cylinder (43) there is sealingly guided for limited axial movement an annular auxiliary piston (44) which in addition is sealingly guided with its inner circumference on the outer surface of the piston wall (9a) of the second closure member (9), said annular piston (44) separating chambers (45, 46) for receiving pressurized gas introduced via inlet opening (48 or 47, respectively), said auxiliary piston (44) having a surface turned away from that slide piston (8) and adapted to cooperate with a projection (51) protruding radially outwardly from the cylindrical piston wall (9a) in order to move the second closure member (9) between its closed position and an intermediate position permitting a seat-cleaning flow of liquid betwen the opposed circumferential surfaces of the radial sealing means (5) and the corresponding seat wall (3a, 3c).

8. A valve according to any one of claims 1 to 7, wherein the slide piston (8) is provided with an axial drain tube (23) sealingly guided in the bottom part of the valve housing (11) and permanently communicating with the leakage space (7) and said axial rod (14) is provided with an internal axial inlet channel (22) for introducing a cleaning liquid into the leakage space (7), characterized in that there are provided means for closing or reducing the flow cross section of the drain tube (23) in order to obtain in the intermediate position of the slide piston (8) or the second closure member (9) a seat-cleaning flow of liquid from the inlet channel (22) through the leakage space and between the opposed circumferential surfaces of the respective sealing means (4, 5) and a corresponding seat wall (3b, 3a) into the respective part (11b, 11a) of the valve housing (11).

9. A valve according to any one of claims 1 to 8, wherein the side walls of said annular groove (10b, 3d) have rounded or bevelled edges to provide a smooth transition for the radial sealing means (4, 5).

**Patentansprüche**

1. Ein Doppelsitzventil umfassend: ein Ventilgehäuse (11) mit mindestens zwei Leitungsöffnungen (1,2) zum Fluideinlaß und -auslaß, zwei zwischen diesen Öffnungen angeordneten koaxialen Ventilsitzen (3a,3b), zwei jeweils in dem erwähnten Ventilgehäuse zur koaxialen Bewegung relativ zueinander und zu ihren entsprechenden Ventilsitzen (3a,3b) zwischen einer Offenstellung und einer Schließstellung geführten Ventilschleißgliedern (8,9), die in ihrer Schließstellung eine Doppeldichtung zwischen den erwähnten Öffnungen ergeben, einem ersten Schließglied (8), das dazu aufgelegt ist, sich während seiner Öffnungsbewegung gegen das zweite Schließglied (9) anzulegen und letzteres während der weiteren Öffnungsbewegung ebenfalls in seine Offenstellung zu bewegen, einem zwischen den erwähnten Schließgliedern (8,9) in sowohl deren Schließ- als auch deren Offenstellung definierten Leckageraum (7), einem diesen Leckageraum (7) permanent mit der Außenseite des Ventils verbindenden Ablaufauslaß (6), sowie Antriebsvorrichtungen (17,20) zur Bewegung der ersten und zweiten Schließglieder (8,9) zwischen den erwähnten Schließ- und Offenstellungen, wobei mindestens ein Schließglied ein Schieberkolben (8) ist, der radiale Dichtungsmittel (4) besitzt und zum Verschieben zwischen einer Offenstellung und einer in einem zylindrischen Ventilsitz (3b) dichtend umschlossenen Schließstellung betätigbar ist und das andere Schließglied (9) an seinem dem Schieberkolben (89) zugewandten Ende mit einer Ausnehmung (10) mit einer im wesentlichen zylindrischen Sitzwandung (10a) versehen ist, die zu dem erwähnten zylindrischen Ventilsitz (3b) koaxial und dimensioniert ist zum dichtenden Aufnehmen des Endabschnitts des Schieberkolbens (8) während der Öffnungsbewegung, bevor das zweite Schließglied (9) öffnet, dadurch gekennzeichnet, daß

a) in mindestens, dem erwähnten zylindrischen Ventilsitz (3d) und der zylindrischen Sitzwand (10a) der erwähnten Ausnehmung (10) an einer von den radialen Dichtungsmitteln (4) des erwähnten Schieberkolbens (8) während ihrer Bewegung zwischen der Schließstellung und der Offenstellung passierten Position eine ringförmige Umfangsnut (10b,3d) vorgesehen ist,

b) die besagte ringförmige Nut (10b,3d) dimensioniert ist, um in einer vorbestimmten Zwischenstellung der erwähnten radialen Dichtungsmittel (4) gegenüber der erwähnten Ringnut (10b, 3d) einen sitzreinigenden Flüssigkeitsstrom längs des zylindrischen Ventilsitzes (3b) und zwischen den gegenüberliegenden Umfangsflächen der erwähnten radialen Dichtungsmittel (4) und der erwähnten Ringnut (10b, 3d) zu gestatten und

c) Antriebsmittel (34—38) zur Bewegung des ersten Schließgliedes (8) zwischen seiner Schließstellung und der erwähnten Zwischenstellung vorgesehen sind.

2. Ein Ventil gemäß Anspruch 1, bei welchem die Ausnehmung (10) des zweiten Schließgliedes (9) eine mit dem erwähnten zylindrischen Ventilsitz (3b) im wesentlichen fluchtende, zylindrische Sitzwand (10a) besitzt und ein am Endabschnitt des Schieberkolbens (8) angeordneter radialer Dichtring (4) während der Öffnungsbewegung von dem erwähnten Ventilsitz (3b) in dichtenden Kontakt mit der fluchtenden, zylindrischen Sitzwand (10a) verschoben wird, dadurch gekennzeichnet, daß die Ringnut (10b) am Eingangsende der erwähnten zylindrischen Sitzwand (10a) angeordnet ist, so daß in der Schließstellung des zweiten Schließgliedes (9) die angrenzende Kante des erwähnten zylindrischen Ventilsitzes (3d) eine Seitenwand der erwähnten Ringnut (10b) bildet.

3. Ein Ventil gemäß Anspruch 1 oder 2, dadurch gekennzeichnet, daß

a) das zweite Schließglied (9) radiale Dichtungsmittel (5a) desitzt und betätigbar ist zur Bewegung zwischen einer Offenstellung und einer in einem zweiten zylindrischen Ventilsitz (3c) mit gegenüber dem zylindrischen Ventilsitz (3b) des ersten Schließgliedes (8) größerem Durchmesser dichtend aufgenommenen Schließstellung,

b) der zweite zylindrische Ventilsitz (3c) ebenfalls an einer von den entsprechenden radialen Dichtungsmitteln (5a) des erwähnten zweiten Schließgliedes (9) während seiner Bewegung zwischen seiner Schließstellung und seiner Offenstellung passierten Position mit einer ringförmigen Umfangsnut (3d) versehen ist,

c) die besagte Ringnut (3d) dimensioniert ist, um in einer Zwischenstellung der erwähnten zweiten radialen Dichtungsmittel gegenüber der besagten Ringnut (3d) einen sitzreinigenden Flüssigkeitsstrom längs des erwähnten, zweiten zylindrischen Ventilsitzes (3c) und zwischen den gegenüberliegenden Umfangsflächen der entsprechenden radialen Dichtungsmittel (5a) und der erwähnten zweiten Ringnut (3d) zu gestatten, und

d) getrennte Antriebsvorrichtungen (40—45) zur Bewegung des erwähnten zweiten Schließgliedes (9) unabhängig vom erwähnten ersten Schließglied (8) zwischen seiner Schließstellung und der entsprechenden Zwischenstellung vorgesehen sind.

4. Ein Ventil gemäß Anspruch 1, dadurch gekennzeichnet, daß der erwähnte Schieberkolben (8) an seinem dem zweiten Schließglied (9) zugewandten Ende einen axial vorstehenden äußeren Ringsteg (8a) mit einer im wesentlichen zylindrischen Innenwand (8b) umfaßt, das erwähnte zweite Schließglied (9) mit einer ringförmigen Ausnehmung (10) versehen ist, die eine im wesentlichen zylindrische Innenwand (10c) besitzt und zur Aufnahme des erwähnten Ringsteges (8a) des Schieberkolbens (8) während der Öffnungsbewegung dimensioniert ist, und auf einer der erwähnten Innenwände (8b oder 10c) ein radialer Dichtring (16) angebracht ist, der dazu ausgelegt ist, während der Öffnungsbewegung kurz vor dem Öffnen des zweiten Schließgliedes (9) gegen die gegenüberliegende Innenwand (10c bzw. 8b) abzudichten, wobei die erwähnte Ringnut (3d) in dem erwähnten zylindrischen Ventilsitz (3b) so angeordnet ist, daß in der Stellung der radialen Dichtungsmittel (4) gegenüber der erwähnten Ringnut (3d) der radiale Dichtring (16) noch einen sitzreinigenden Flüssigkeitsstrom in den und aus dem Leckageraum (7) gestattet.

5. Ein Ventil gemäß irgendeinem der Ansprüche 1 bis 4, wobei das erwähnte zweite Schließglied (9) als ein im wesentlichen zylindrischer Kolben ausgebildet ist mit einer im Ventilgehäuse dichtend gefürten zylindrischen Kolbenwand (9a) mit einem Durchmesser, der gleich oder etwas kleiner ist, als der der Dichtungsmittel (5), wobei der Schieberkolben mit einer sich axial dichtend durch das zweite Schließglied (9) erstreckenden Stange (14) versehen ist und im Innenraum des erwähnten zweiten Schließgliedes (9) auf die erwähnte Stange (14) permanent einwirkende, den erwähnten Schieberkolben (8) in seine Schließstellung drängende erste Federvorrichtungen (18) und das erwähnte zweite Schließglied (9) während des Öffnens des Ventils zum erwähnten Schieberkolben (8) hin drängende zweite Federvorrichtungen (19) vorgesehen sind, dadurch gekennzeichnet, daß der von der zylindrischen Kolbenwand (9a) umschlossene Innenraum des zweiten Schließgliedes (9) zusammen mit dem Innenraum eines am Gehäuse (11) befestigten Zylinders (43) eine Gaskammer (45) bildet zur Aufnahme eines Druckgases durch eine Einlaßöffnung (47), um das zweite Schließglied (9) in seine Schließstellung zu drängen.

6. Ein Ventil gemäß irgendeinem der Ansprüche 1 bis 5, wobei der Schieberkolben (8) mit einem Kolben (17) verbunden ist, der den beweglichen Teil eines pneumatischen Motors bildet, der zur Bewegung des erwähnten Schieberkolbens (8) zur Anlage gegen das erwähnte zweite Schließglied (9) und danach zur Bewegung beider Schließglieder (8,9) in ihre Offenstellung ausgelegt ist, wobei der erwähnte Kolben (17) im Ventilgehäuse (11) dichtend geführt ist und vorzugsweise den gleichen Durchmesser besitzt, wie der zylindrische Ventilsitz (3b) des Schieberkolbens (8), dadurch gekennzeichnet, daß aufder Stange (14) des Schieberkolbens (8) ein Hilfskolben (35) zur begrenzten axialen Bewegung geführt ist, der in einem Hilfszylinder (34) verschiebbar ist und diesen in zwei Kammern (39,40) zum Aufnehmen eines Druckgases durch entsprechende Einlaßöffnungen (37 bzw. 38) zur Bewegung des erwähnten Schieberkolbens zwischen seiner Schließstellung und seiner Zwischenstellung aufteilt.

7. Ein Ventil gemäß Anspruch 5 oder 6, dadurch gekennzeichnet, daß in dem erwähnten Zylinder (43) ein ringförmiger Hilfskolben (44) zu begrenzter axialer Bewegung dichtend geführt ist, der zusätzlich mit seinem Innenumfang dichtend an der Außenfläche der Kolbenwand (9a) des zweiten Schließgliedes (9) geführt ist, wobei der erwähnte Ringkolben (44) Kammern (45,46) zur Aufnahme von über eine Einlaßöffnung (47 bzw. 48) eingeführtem Druckgas trennt und der erwähnte Hilfskolben (44) eine vom Schieberkolben (8) abgewandte Fläche besitzt, die dazu ausgelegt ist, mit einem von der zylindrischen Kolbenwand (9a) radial auswärts vorstehenden Vorsprung (51) zusammenzuwirken, um das zweite Schließglied (9) zwischen seiner Schließstellung und einer Zwischenstellung zu bewegen, die einen sitzreinigenden Flüssigkeitsstrom zwischen den gegenüberliegenden Umfangsflächen der radialen Dichtungsmittel (5) und der entsprechenden Sitzwand (3a,3c) gestattet.

8. Ein Ventil gemäß irgendeinem der Ansprüche 1 bis 7, wobei der Schieberkolben (8) mit einem axialen Ablaufrohr (23) versehen ist, das im Bodenteil des Ventilgehäuses (11) dichtend geführt ist und permanent mit dem Leckageraum (7) kommuniziert, und die erwähnte axiale Stange (14) mit einem internen amialen Einlaßkanal (22) zum Einführen einer Reinigungsflüssigkeit in den Leckageraum (7) versehen ist, dadurch gekennzeichnet, daß Mittel zum Verschließen oder Verkleinern des Strömungsquerschnitts des Ablaufrohres (23) vorgesehen sind, um in der Zwischenstellung des Schieberkolbens (8) oder des zweiten Schließgliedes (9) einen sitzreinigenden Flüssigkeitsstrom vom Einlaßkanal (22) durch den Leckageraum und zwischen den gegenüberliegenden Umfangsflächen der betreffenden Dichtungsmittel (4,5) und einer entsprechenden Sitzwand (3b,3a) in den entsprechenden Teil (11b, 11a) des Ventilgehäuses (11) zu erzielen.

9. Ein Ventil gemäß irgendeinem der Ansprüche 1 bis 8, wobei die Seitenwände der erwähnten Ringnut (10b,3d) gerundete oder abgeschrägte Kanten zur Erzielung eines glattes Überganges für die radialen Dichtungsmittel (4,5) besitzen.

**Revendications**

1. Clapet à siège double comportant:
un carter de clapet (11) présentant au moins deux ouvertures de conduite (1, 2) pour l'entrée et la sortie du fluide, deux sièges coaxiaux de clapet (3, 3b) disposés entre lesdites ouvertures, deux obturateurs de clapet (8, 9), guidés chacun dans ledit carter de clapet pour prendre un mouvement coaxial l'un par rapport à l'autre et par rapport à leurs siéges respectifs de clapet (3, 3b) entre une position ouverte et une position fermée, réalisant ensemble, dans leur position fermée, une double étanchéïté entre lesdites ouvertures, un premier obturateur (8) étant prévu pour, au cours de son mouvement d'ouverture, venir buter contre le second obturateur (9) et pour, au cours de la poursuite de son mouvement d'ouverture, amener également ce dernier dans sa position ouverte; comportant aussi un espace de fuite (7) défini entre lesdits obturateurs (8, 9) à la fois dans leur position fermée et dans leur position ouverte; comportant aussi une sortie d'évacuation (6) reliant en permanence ledit espace de fuite (7) avec l'extérieur du clapet; et comportant aussi des moyens d'entraïnement (17, 20) pour déplacer ledit premier obturateur et ledit second obturateur (8, 9) entre lesdites positions fermées et lesdites positions ouvertes, respectivement, au moins unobturateur étant un piston coulissant (8) qui présente un moyen d'étanchéïté radial (4) et pouvant opérationnellement coulisser entre une position ouverte et une position fermée dans laquelle il vient, avec étanchéïté, sur un siège cylindrique de clapet (3b), et l'autre obturateur (9) présentant, à son extrémité qui fait face au dit piston coulissant (8), une niche (10) qui comporte une paroi de siège sensiblement cylindrique (10a), coaxiale au dit siège cylindrique de clapet (3b) et dimensionnée pour recevoir, avec étanchéïté, au cours de son mouvement d'ouverture, la portion d'extrémité dudit piston coulissant (8) avant que ledit second obturateur (9) s'ouvre, caractérise

a) en ce que dans au moins l'un des deux, dudit siège cylindrique de clapet (3b) et de la paroi de siège cylindrique (10a) de ladite niche (10), il est prévu une rainure annulaire circonférentielle (10b, 3d) à une position devant laquelle passe le moyen d'étanchéïté radial (4) dudit piston coulissant (8) au cours de son mouvement entre la position fermée et la position ouverte.

b) en ce que ladite rainure annulaire (10b, 3d) est dimensionnée pour permettre, à une position intermédiaire prédéterminée dudit moyen d'étanchéïté radial (4) en face de ladite rainure annulaire (10b, 3d), un écoulement de liquide de nettoyage

du siége le long dudit siège cylindrique de clapet (3d) et entre les surfaces circonférentielles opposées dudit moyen d'étanchéïté radial (4) et de ladite rainure annulaire (10b, 3d), et

c) en ce qu'il est prévu unmoyen d'entraînement (34—38) pour déplacer ledit premier obturateur (8) entre sa position fermée et ladite position intermédiaire.

2. Clapet selon la revendication 1, dans lequel la niche (10) du second obturateur (9) présente une paroi de siège cylindrique (10a) substantiellement alignée avec ledit siège cylindrique de clapet (3b); et dans lequel une bague d'étanchéïté radiale (4), disposée à la portion d'extrémité du piston coulissant (8), se décale au cours du mouvement d'ouverture pour passer, dudit siège de clapet (3b), en contact étanche avec ladite paroi de siège cylindrique alignée (10a),

caractérisé en ce que la rainure annulaire (10b) est disposée à l'extrémité d'entrée de ladite paroi de siège cylindrique (10a) de façon telle que dans la position fermée du second obturateur (9), le bord, voisin, dudit siège cylindrique de clapet (3b) forme une paroi latérale pour ladite rainure annulaire (10b).

3. Clapet selon la revendication 1 ou 2, caractérisé

a) en ce que ledit second obturateur (9) présente un moyen d'étanchéïté radial (5a) et est opérationnel pour exécuter un mouvement entre une position ouverte et une position fermée dans laquelle il se loge, avec étanchéïté, dans un second siège cylindrique de clapet (3c) qui présente un diamètre supérieur à celui du siège cylindrique de clapet (3b) du premier obturateur (8),

b) en ce que ledit second siège cylindrique de clapet (3c) présente également une rainure annulaire circonférentielle (3d) à une position où passe le moyen d'étanchéïté radial respectif (5a) du dit second obturateur (9) au cours de son mouvement entre sa position fermée et sa position ouverte,

c) en ce que ladite rainure annulaire (3d) est dimensionnée pour permettre, à une position intermédiaire du dit second moyen d'étanchéïté radial (5a) en face de ladite rainure annulaire (3d), un écoulement de liquide de nettoyage du siège le long du dit second siège cylindrique de clapet (3c) et entre les surfaces circonférentielles, situées l'une en face de l'autre, du moyen d'étanchéïté radial respectif (5a) et de ladite seconde rainure annulaire (3d), et

d) en ce qu'il est prévu des moyens d'entraînement distincts (40—45) pour déplacer ledit second obturateur (9), indépendamment du dit premier obturateur (8), entre sa position fermée et la position intermédiaire respective.

4. Clapet selon la revendication 1, caractérisé en ce que ledit piston coulissant (8) comporte, à son extrémité qui fait face au second obturateur (9), un pourtour annulaire extérieur (8a) qui vient axialement en saillie et présente une paroi intérieure (8b) sensiblement cylindrique; en ce que le second obturateur (9) comporte une niche annulaire (10) qui présente une paroi intérieure sensiblement cylindrique (10c) et que est dimensionnée pour recevoir, au cours du mouvement d'ouverture, ledit pourtour annulaire (8a) du piston coulissant (8); et en ce que, sur l'une desdites parois intérieures (8b ou 10c), il est prévu une bague d'étanchéïté radiale (16) adaptée à assurer, au cours du mouvement d'ouverture, l'étanchéïté à l'égard de la paroi intérieure située en face (10c ou 8b respectivement) un peu avant que ledit second obturateur (9) s'ouvre, ladite rainure annulaire (3b) étant disposée dans ledit siège cylindrique de clapet (3b) de façon telle que, dans la position du moyen d'étanchéïté radial (4) en face de ladite rainure annulaire (3d), la bague d'étanchéïté radiale (16) permette encore le passage du liquide de nettoyage du siège vers l'espace de fuite (7) et en provenance de cet espace de fuite.

5. Clapet selon une quelconque des revendications 1 à 4, dans lequel ledit second obturateur (9) a la forme d'un piston sensiblement cylindrique présentant une paroi de piston cylindrique (9a) guidée, avec étanchéïté, dans le carter de clapet et ayant un diamètre égal, ou légèrement inférieur, à celui du moyen d'étanchéïté (5); en ce que ledit piston coulissant comporte une tige (14) qui s'étend axialement, avec étanchéïté, à travers ledit second obturateur (9); et en ce qu'il est prévu dans l'espace intérieur du dit second obturateur (9) un premier moyen formant ressort (18) que agit en permanence sur ladite tige (14) pour pousser ledit piston coulissant (8) dans sa position formée et un second moyen formant ressort (19) pour pousser ledit second obturateur (9), au cours de l'ouverture du clapet, en direction dudit piston coulissant (8), caractérisé en ce que l'espace intérieur entouré par la paroi du piston cylindrique (9a) du second obturateur (9) forme, avec l'espace intérieur d'un cylindre (43) fixé au carter (11), une chambre à gaz (45) pour recevoir un gaz sous pression par une ouverture d'entrée (47) pour pousser le second obturateur (9) dans sa position· fermée.

6. Clapet selon une quelconque des revendications 1 à 5, dans lequel le piston coulissant (8) est connecté à un piston (17) qui forme la partie mobile d'un moteur pneumatique prèvu pour amener ledit piston coulissant (8) en butée dans ledit second obturateur (9) et ensuite amener les deux obturateurs (8, 9) dans leur position ouverte, ledit piston (17) étant guidé, avec étanchéïté, dans le carter de clapet (11) et ayant de préférence le même que le siège cylindrique de clapet (3b) du piston coulissant (8), caractérisé en ce que sur la tige (14) du piston coulissant (8) est guidé, pour effectuer un mouvement axial limité, un piston auxiliaire (35) qui peut se déplacer dans un cylindre auxiliaire (34) en le séparant en deux chambres (39, 40) pour recevoir un gaz sous pression par des ouvertures d'entrée respectives (37) ou 38 respectivement) pour déplacer ledit piston coulissant entre sa position fermée et sa position intermédiaire.

7. Clapet selon la revendication 5 ou 6, caractérisé en ce que dans ledit cylindre (43) est guidé, avec étanchéïté, pour effectuer un mouvement axial limité, un piston axialiaire annulaire (44) qui, en outre, est guidé, avec étanchéïté, par sa circonférence intérieure, sur la surface extérieure de la paroi de piston (9a) du second obturateur (9), ledit piston annulaire (44) séparant des chambres (45, 46) pour recevoir du gaz sous pression introduit par une ouverture d'entrée (48 ou 47, respectivement), ledit piston auxiliaire (44) présentant une surface, côté opposé à ce piston coulissant (8), prévue pour collaborer avec une saillie (51) qui dépasse radialement vers l'extérieur depuis la paroi cylindrique de piston (9a) pour déplacer le second obturateur (9) entre sa position fermée et une position intermédiaire qui permet un écoulement de liquide de nettoyage du siège entre les surfaces circonférentielles opposées du moyen d'étanchéïté radial (5) et la paroi correspondante du siège (3a, 3c).

8. Clapet selon une quelconque des revendications 1 à 7, dans lequel le piston coulissant (8) comporte un tube axial d'évacuation (23) guidé, avec étanchéïté, dans la partie inférieure du carter de clapet (11) et communiquant en permanence avec l'espace de fuite (7); et dans lequel ladite tige axiale (14) présente un canal d'entrée axial interne (22) pour introduite un liquide de nettoyage dans l'espace de fuite (7), caractérisé en ce qu'il est prévu un moyen pour fermer ou réduire la section de passage du tube d'évacuation (23) pour obtenir, dans la position intermédiaire du piston coulissant (8) ou du second obturateur (9), un écoulement de liquide de nettoyage du siège, provenant du canal d'entrée (22), dans l'espace du fuite et entre les surfaces circonférentielles opposées des moyens d'étanchéïté respectifs (4, 5) en une surface de siège correspondante (3b, 3a) dans la partie respective (11b, 11a) du carter de clapet (11).

9. Clapet selon l'une quelconque des revendications 1 à 8, dans lequel les parois latérales de ladite rainure annulaire (10b, 3d) ont des bords arrondis ou chanfreinés pour assurer une transition sans à-coups pour les moyens d'étanchéïté radiaux (4, 5).

0 174 384

FIG 1

Valve closed          Valve open

1

FIG 2

FIG 3a
Closed valve

FIG 3b
Cleaning seat and seal of lower closure member

FIG 3c
Cleaning seat and seal of upper closure member

FIG 3d
Open valve

3

FIG 4a
Closed valve

FIG 4b
Cleaning seat and seal of lower closure member

FIG 4c
Cleaning seat and seal of upper closure member

FIG 4d
Open valve